# EUROPEAN PATENT APPLICATION

(11) **EP 4 752 523 A1**
(43) Date of publication of application: **03.06.2026**
(21) Application number: 25211264.4
(22) Date of filing: 27.10.2025
(51) Int. Cl.: G01N 3/56, G01N 19/02

(54) **DEVICE AND SYSTEM FOR WEAR TESTING**

(30) Priority: 27.11.2024 GB 202417380
(71) Applicant: Rolls-Royce plc, London N1 9FX (GB)
(72) Inventor: Blades, Luke, Derby, DE24 8BJ (GB); Patsias, Sophoclis, Derby, DE24 8BJ (GB); Dumas, Loic, Derby, DE24 8BJ (GB); McElhone, Martin, deceased (GB)
(74) Representative: Rolls-Royce plc

(57) **Abstract**

A device (100) for wear testing includes a frame (106), a rotary actuator (108), and a linear actuator (110) spaced apart from the rotary actuator (108) along a longitudinal axis (102) of the frame (106). The device (100) has first and second specimen holding units (112, 140). The first specimen holding unit (112) includes a seat (124) connected to the linear actuator (110), a plate (114) engaging with the seat (124), and a first thrust bearing (136) connected to the plate (114) and at least one first diaphragm plate (134) connected to the frame (106). The second specimen holding unit (140) includes a shaft (142) connected to the rotary actuator (108) and a second thrust bearing (150) connected the frame (106). The rotary actuator (108) is configured to rotate a second specimen (60) about the longitudinal axis (102). The linear actuator (110) is configured to move a first specimen (50) along the longitudinal axis (102), such that the first specimen (50) engages with the second specimen (60).

## Description

### FIELD

This disclosure relates to a device and a system for wear testing.

### BACKGROUND

While designing a pair of components that contact each other, wear may be a significant factor. Slip displacement and contact pressure are two parameters based on which wear coefficients are typically determined for the pair of components, or more specifically, for a pair of materials of the pair of components. For determining the wear coefficients, wear testing may be performed on a pair of specimens made from materials corresponding to the pair of components. While the wear coefficients determined based on the aforementioned parameters may be sufficiently accurate in the case of fully sliding contacts, the wear coefficients may be inaccurate in the case of fretting contacts due to debris retention between the pair of components. It may be important to maintain a well-defined contact between the pair of specimens during wear testing to minimize variations in slip displacement and contact pressure.

### SUMMARY

In a first aspect, there is provided a device for wear testing. The device includes a frame having a longitudinal axis, a transverse axis perpendicular to the longitudinal axis, and a transverse plane perpendicular to the longitudinal axis. The device further includes a rotary actuator. The device further includes a linear actuator spaced apart from the rotary actuator along the longitudinal axis. The device further includes a first specimen holding unit. The first specimen holding unit includes a plate. The plate includes an engagement portion extending along the longitudinal axis. The engagement portion includes a first plate engagement surface that is planar and configured to engage with a first specimen. The engagement portion further includes a second plate engagement surface opposite to the first plate engagement surface. The second plate engagement surface is spherically curved. The plate further includes a mounting portion extending outwardly from the engagement portion along the transverse plane. The first specimen holding unit further includes a seat connected to the linear actuator. The seat includes a support portion extending along the longitudinal axis. The support portion includes a plate support surface that is complementary with the second plate engagement surface. The plate support surface is configured to engage with the second plate engagement surface. The seat further includes a coupling portion extending outwardly from the support portion along the transverse plane. The first specimen holding unit further includes a first flexible coupling connecting the mounting portion of the plate to the coupling portion of the seat. The first specimen holding unit further includes at least one first diaphragm plate connected to the frame. The first specimen holding unit further includes a first thrust bearing connected to the plate and the at least one first diaphragm plate. The device further includes a second specimen holding unit. The second specimen holding unit includes a shaft extending along the longitudinal axis and connected to the rotary actuator. The shaft includes a shaft end face including a shaft engagement surface configured to engage with a second specimen. The shaft further includes a flange extending along the transverse plane and spaced apart from the shaft end face along the longitudinal axis. The second specimen holding unit further includes a second thrust bearing connected to the frame and disposed between the flange of the shaft and the frame with respect to the longitudinal axis. The rotary actuator is configured to rotate the second specimen about the longitudinal axis. The linear actuator is configured to move the first specimen along the longitudinal axis, such that the first specimen engages with the second specimen.

The device may facilitate determining accurate fretting wear coefficients for the first specimen and the second specimen. The device may maintain both translational alignment and angular alignment of the first specimen and the second specimen during wear testing. The device may further maintain respective engagement surfaces of the first specimen and the second specimen in a substantially coplanar arrangement during wear testing.

The translational alignment may be maintained by the first thrust bearing and the second thrust bearing. Specifically, a normal load applied to the second specimen, due to engagement with the first specimen, by the linear actuator may be reacted to the frame through the second thrust bearing. This may promote maintenance of the second specimen at a desired position. Further, a normal load experienced by the first specimen, due to engagement with the second specimen, may be reacted to a portion or a member of the frame proximal to the linear actuator. Furthermore, upon engagement the first specimen with the second specimen, a radial load may be applied to the first specimen by the rotary actuator. The radial load may be carried to the frame by the at least one first diaphragm plate. Normal loads applied to the first thrust bearing and the second thrust bearing (and the consequent radial reaction force) may be controllable and independent of a test load (i.e., an axial load applied using the linear actuator along the longitudinal axis).

The angular alignment may be maintained by the plate, the seat, and the first flexible coupling. Specifically, the plate and the seat may allow the first specimen to conform with the second specimen due to bending of the first flexible coupling. This may improve a contact between the respective engagement surfaces of the first specimen and the second specimen.

The test load may be uniformly distributed over the respective engagement surfaces of the first specimen and the second specimen. Non-uniform loading may cause each of the first specimen and the second specimen to experience higher vibrational loads. Vibrational loads may cause slipping between the first specimen and the second specimen, which may undesirably lead to increased debris accumulation, thereby complicating wear analysis of the first specimen and the second specimen.

The device may allow precise wear study of the first specimen and the second specimen during an initial contact (e.g., prior to oxidation of the first specimen and the second specimen), through the transition states of the first specimen and the second specimen, and in worn-in states the first specimen and the second specimen as a function of cycle number. This may be important as the coefficient of friction (CoF) between the respective engagement surfaces of the first specimen and the second specimen may change due to production of oxides and other byproducts.

The device may also provide load paths between the linear actuator and the rotary actuator, such that the rotary actuator does not experience axial load, and the linear actuator does not experience torque. Instead, the torque and the axial load may be reacted directly to the frame.

The device may be used for dry and non-lubricated fretting wear testing. The device may improve a design process of components that contact each other during operation, and reduce a likelihood of pre-mature failure of the components.

In some embodiments, the frame includes a first horizontal member extending along the transverse plane. The first horizontal member includes a first aperture configured to at least partially receive the seat of the first specimen holding unit. The frame further includes a second horizontal member extending along the transverse plane and spaced apart from the first horizontal member along the longitudinal axis. The first horizontal member includes a second aperture configured to at least partially receive the shaft of the second specimen holding unit. The second thrust bearing is connected to the second horizontal member. The frame further includes at least one first vertical member extending along the longitudinal axis and connecting the first horizontal member to the second horizontal member. The at least one first diaphragm plate of the first specimen holding unit is connected to the at least one vertical member.

In some embodiments, the rotary actuator includes a rotary shaft. The frame further includes a third horizontal member extending along the transverse plane and spaced apart from the second horizontal member along the longitudinal axis. The third horizontal member is proximal to the second horizontal member and distal to the first horizontal member. The rotary actuator is connected to the third horizontal member. The third horizontal member includes a third aperture configured to receive the rotary shaft of the rotary actuator. The frame further includes at least one second vertical member extending along the longitudinal axis and connecting the third horizontal member to the second horizontal member.

In some embodiments, the device further includes a rotary sensor configured to detect a rotation angular velocity or a rotation angular displacement of the rotary shaft of the rotary actuator.

In some embodiments, the frame further includes at least one third vertical member extending along the longitudinal axis and connected to the first horizontal member. The device further includes a load cell connecting the linear actuator to the seat of the first specimen holding unit. The device further includes at least one second diaphragm plate disposed between the load cell and the linear actuator along the longitudinal axis and connected to the at least one third vertical member.

In some embodiments, the linear actuator includes a piston. The frame further includes a fourth horizontal member extending along the transverse plane and spaced apart from the first horizontal member along the longitudinal axis. The fourth horizontal member is proximal to the first horizontal member and distal to the second horizontal member. The fourth horizontal member is spaced apart from the at least one second diaphragm plate along the longitudinal axis. The linear actuator is connected to the fourth horizontal member. The fourth horizontal member includes a fourth aperture configured to receive the piston of the linear actuator. The frame further includes at least one fourth vertical member extending along the longitudinal axis and connecting the fourth horizontal member to the first horizontal member.

In some embodiments, the device further includes a linear sensor configured to detect a position of the piston of the linear actuator.

In some embodiments, the shaft of the second specimen holding unit includes a shaft aperture. The plate of the first specimen holding unit includes a plate aperture. The seat of the first specimen holding unit includes a seat aperture. The device further includes a centring rod extending through the shaft aperture, the plate aperture, and the seat aperture.

In some embodiments, the shaft aperture extends through the shaft end face of the shaft. The plate aperture extends through the engagement portion of the plate. The seat aperture extends partially through the support portion of the seat. The centring rod is configured to extend through each of the first specimen and the second specimen.

In some embodiments, the first specimen holding unit further includes a first clamping ring configured to secure the first specimen to the plate. The second specimen holding unit further includes a second clamping ring configured to secure the second specimen to the shaft.

In some embodiments, the device further includes a second flexible coupling connecting the rotary actuator to the shaft of the second specimen holding unit.

In some embodiments, the second flexible coupling includes a bellows coupling.

In some embodiments, the first flexible coupling includes a bellows coupling.

In some embodiments, the at least one first diaphragm plate includes a pair of first diaphragm plates.

In some embodiments, each of the first thrust bearing and the second thrust bearing includes a tapered roller bearing.

In a second aspect, there is provided a system for wear testing. The system includes a first specimen. The system further includes a second specimen different from the first specimen. The system further includes a device for wear testing. The device includes a frame having a longitudinal axis, a transverse axis perpendicular to the longitudinal axis, and a transverse plane perpendicular to the longitudinal axis. The device further includes a rotary actuator. The device further includes a linear actuator spaced apart from the rotary actuator along the longitudinal axis. The device further includes a first specimen holding unit. The first specimen holding unit includes a plate. The plate includes an engagement portion extending along the longitudinal axis. The engagement portion includes a first plate engagement surface that is planar and configured to engage with the first specimen. The engagement portion further includes a second plate engagement surface opposite to the first plate engagement surface. The second plate engagement surface is spherically curved. The plate further includes a mounting portion extending outwardly from the engagement portion along the transverse plane. The first specimen holding unit further includes a seat connected to the linear actuator. The seat includes a support portion extending along the longitudinal axis. The support portion includes a plate support surface that is complementary with the second plate engagement surface. The plate support surface is configured to engage with the second plate engagement surface. The seat further includes a coupling portion extending outwardly from the support portion along the transverse plane. The first specimen holding unit further includes a first flexible coupling connecting the mounting portion of the plate to the coupling portion of the seat. The first specimen holding unit further includes at least one first diaphragm plate connected to the frame. The first specimen holding unit further includes a first thrust bearing connected to the plate and the at least one first diaphragm plate. The device further includes a second specimen holding unit. The second specimen holding unit includes a shaft extending along the longitudinal axis and connected to the rotary actuator. The shaft includes a shaft end face including a shaft engagement surface configured to engage with the second specimen. The shaft further includes a flange extending along the transverse plane and spaced apart from the shaft end face along the longitudinal axis. The second specimen holding unit further includes a second thrust bearing connected to the frame and disposed between the flange of the shaft and the frame with respect to the longitudinal axis.

The system may facilitate determining accurate fretting wear coefficients for the first specimen and the second specimen. The device of the system may maintain both translational alignment and angular alignment of the first specimen and the second specimen during wear testing. The device may further maintain respective engagement surfaces of the first specimen and the second specimen in a substantially coplanar arrangement during wear testing.

The translational alignment may be maintained by the first thrust bearing and the second thrust bearing. Specifically, a normal load applied to the second specimen, due to engagement with the first specimen, by the linear actuator may be reacted to the frame through the second thrust bearing. This may promote maintenance of the second specimen at a desired position. Further, a normal load experienced by the first specimen, due to engagement with the second specimen, may be reacted to a portion or a member of the frame proximal to the linear actuator. Furthermore, upon engagement the first specimen with the second specimen, a radial load may be applied to the first specimen by the rotary actuator. The radial load may be carried to the frame by the at least one first diaphragm plate. Normal loads applied to the first thrust bearing and the second thrust bearing (and the consequent radial reaction force) may be controllable and independent of a test load (i.e., an axial load applied using the linear actuator along the longitudinal axis).

The angular alignment may be maintained by the plate, the seat, and the first flexible coupling. Specifically, the plate and the seat may allow the first specimen to conform with the second specimen due to bending of the first flexible coupling. This may improve a contact between the respective engagement surfaces of the first specimen and the second specimen.

The test load may be uniformly distributed over the respective engagement surfaces of the first specimen and the second specimen. Non-uniform loading may cause each of the first specimen and the second specimen to experience higher vibrational loads. Vibrational loads may cause slipping between the first specimen and the second specimen, which may undesirably lead to increased debris accumulation, thereby complicating wear analysis of the first specimen and the second specimen.

The system may allow precise wear study of the first specimen and the second specimen during an initial contact (e.g., prior to oxidation of the first specimen and the second specimen), through the transition states of the first specimen and the second specimen, and in worn-in states the first specimen and the second specimen as a function of cycle number. This may be important as the coefficient of friction (CoF) between the respective engagement surfaces of the first specimen and the second specimen may change due to production of oxides and other byproducts.

The device of the system may also provide load paths between the linear actuator and the rotary actuator, such that the rotary actuator does not experience axial load, and the linear actuator does not experience torque. Instead, the torque and the axial load may be reacted directly to the frame.

The system may be used for dry and non-lubricated fretting wear testing. The system may improve a design process of components that contact each other during operation, and reduce a likelihood of pre-mature failure of the components.

In some embodiments, each of the first specimen and the second specimen includes a base. Each of the first specimen and the second specimen further includes a projection extending from the base along and about a specimen axis. The projection includes an engagement surface that is planar and annular. The projection further includes a projection exterior surface that is curved along the specimen axis. The projection exterior surface defines an outer diameter of the projection. The outer diameter of the projection decreases non-linearly along the specimen axis from the base to the engagement surface.

In some embodiments, the outer diameter decreases along the specimen axis from the base to the engagement surface in accordance with an elliptical function.

In a third aspect, there is provided a specimen for wear testing. The specimen includes a base. The specimen further includes a projection extending from the base along and about a specimen axis. The projection includes an engagement surface that is planar and annular. The projection further includes a projection exterior surface that is curved along the specimen axis. The projection exterior surface defines an outer diameter of the projection. The outer diameter of the projection decreases non-linearly along the specimen axis from the base to the engagement surface.

The specimen may enable uniform pressure distribution over the engagement surface during wear testing. The specimen may experience nominally identical wear conditions over the engagement surface.

Two units of the specimen (also referred to as "specimens") may be used for wear testing. The engagement surface of one specimen may engage with the engagement surface of the other specimen. Both of the specimens may experience uniform pressure distribution over the respective engagement surfaces during wear testing. Further, the outer diameter of the projection that decreases non-linearly may facilitate achieving nominally identical wear conditions over the engagement surface of each of the specimens. Thus, pointwise pressure and pointwise slip amplitude may be substantially equal to their average values.

Wear data obtained by wear testing using the specimens (each of the specimens having the engagement surface whose conditions are known in terms of pressure, slip amplitude, and ejection of debris) may be beneficial as pressure, slip amplitude, and ejection of debris may have strong effects on a rate of wear of the specimens. The wear data obtained by wear testing the specimens may advantageously include information related to steady state conditions as well as transient conditions of the specimens.

In some embodiments, the outer diameter of the projection decreases along the specimen axis from the base to the engagement surface in accordance with an elliptical function.

In some embodiments, the base includes an aperture surrounded by the projection. The aperture defines a base interior surface. The projection includes a projection interior surface opposite to the projection exterior surface. The projection interior surface and the base interior surface are continuous.

In some embodiments, the base and the projection are integral.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**FIG. 1** shows a perspective view of a system including a device for wear testing in accordance with an embodiment of the present disclosure;
**FIG. 2** shows a cross-sectional view of the system taken along a line A-A' of FIG. 1;
**FIG. 3** shows a cross-sectional view of a portion of the system in accordance with an embodiment of the present disclosure;
**FIG. 4** shows a cross-sectional view of a portion of the system with a frame of the device not shown in accordance with an embodiment of the present disclosure;
**FIG. 5** shows a cross-sectional view of a portion of the device in accordance with an embodiment of the present disclosure;
**FIG. 6** shows a cross-sectional view of another portion of the device in accordance with an embodiment of the present disclosure;
**FIG. 7A** shows a perspective view of a specimen for wear testing in accordance with an embodiment of the present disclosure; and
**FIG. 7B** shows a cross-sectional view of the specimen taken along a line B-B' of FIG. 7A.

### DETAILED DESCRIPTION

Aspects and embodiments of the present disclosure will now be discussed with reference to the accompanying figures. Further aspects and embodiments will be apparent to those skilled in the art.

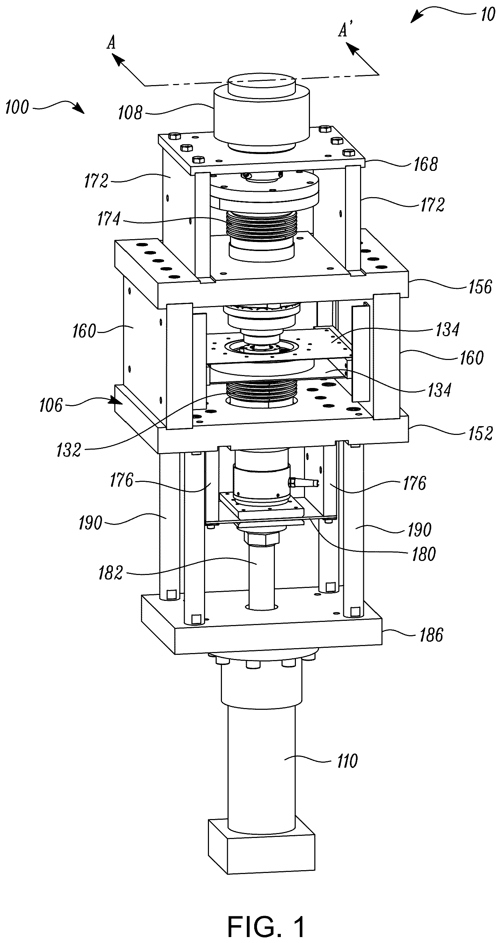

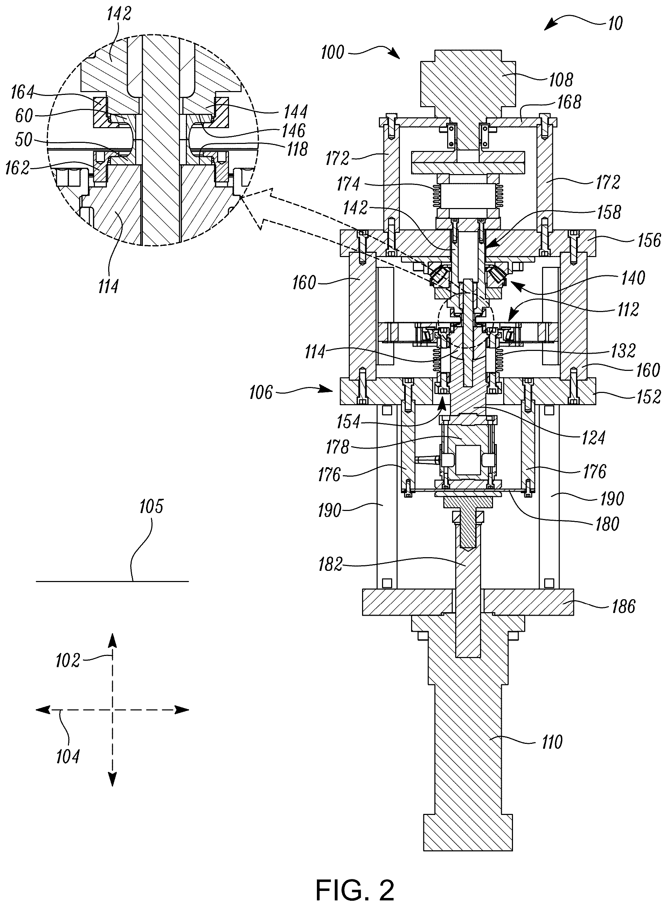

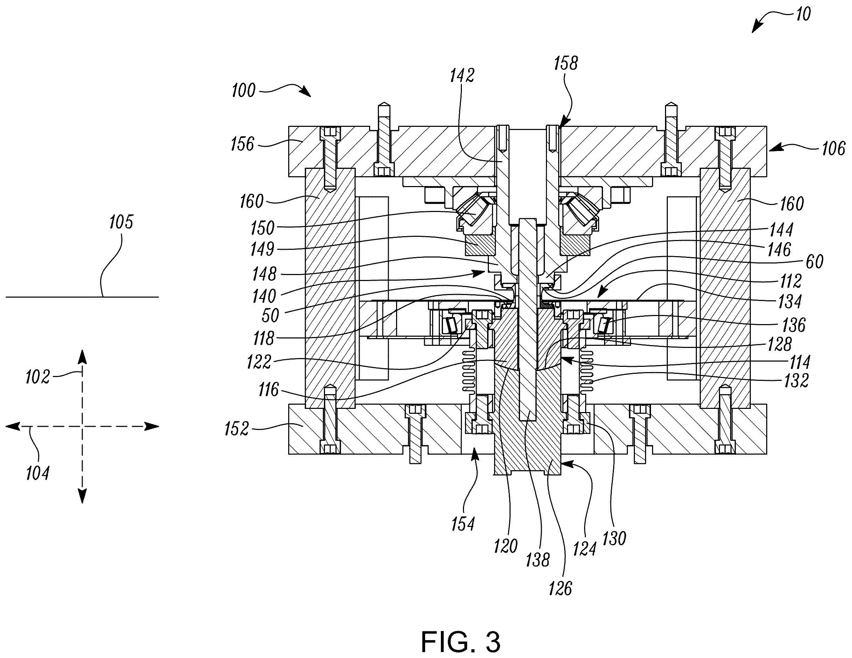

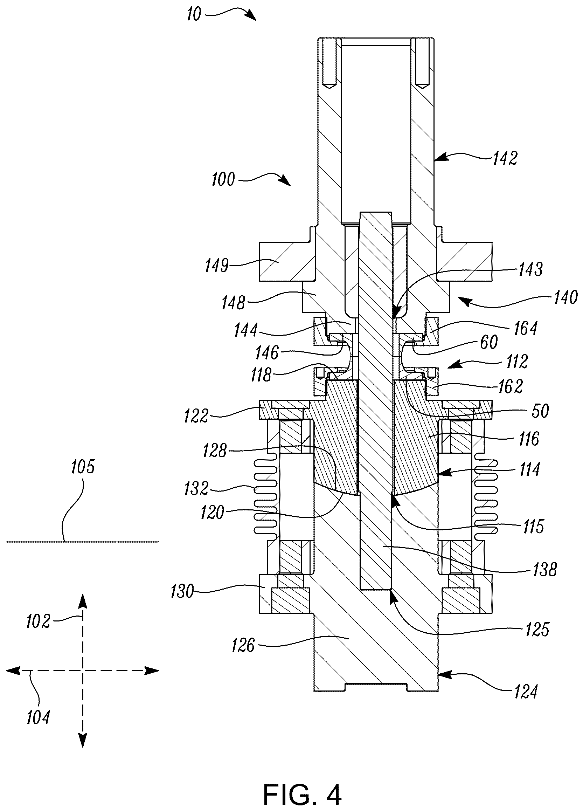

FIGS. 1 to 4 show a system 10 for wear testing in accordance with an embodiment of the present disclosure. Specifically, FIG. 1 shows a perspective view of the system 10, FIG. 2 shows a cross-sectional view of the system 10 taken along a line A-A' of FIG. 1, FIG. 3 shows a cross-sectional view of a portion of the system 10, and FIG. 4 shows a cross-sectional view of a portion of the system 10 with some components not shown.

Referring to FIGS. 1 to 4, the system 10 includes a first specimen 50 and a second specimen 60 different from the first specimen 50. The first specimen 50 and the second specimen 60 are best shown in FIG. 2. The first specimen 50 may correspond to a first component and the second specimen 60 may correspond to a second component that contacts the first component during operation. It may be noted that the first specimen 50 and the second specimen 60 may have an identical geometry. Specifically, in some embodiments, the first specimen 50 and the second specimen 60 may be made of different materials. In other embodiments, the first specimen 50 and the second specimen 60 may be made of the same material.

The system 10 further includes a device 100 for wear testing. The device 100 includes a frame 106 having a longitudinal axis 102, a transverse axis 104 perpendicular to the longitudinal axis 102, and a transverse plane 105 perpendicular to the longitudinal axis 102. The transverse axis 104 may lie in transverse plane 105. The frame 106 is not shown in FIG. 4.

The device 100 further includes a rotary actuator 108. The device 100 further includes a linear actuator 110 spaced apart from the rotary actuator 108 along the longitudinal axis 102. Each of the rotary actuator 108 and the linear actuator 110 may be supported by the frame 106.

The device 100 further includes a first specimen holding unit 112. The first specimen holding unit 112 is shown in more detail in FIGS. 3 and 4. The first specimen holding unit 112 includes a plate 114. As shown in FIGS. 3 and 4, the plate 114 includes an engagement portion 116 extending along the longitudinal axis 102. The engagement portion 116 includes a first plate engagement surface 118 that is planar and configured to engage with the first specimen 50. The first specimen 50 may be secured to the plate 114, such that the first specimen 50 engages with the first plate engagement surface 118. In some embodiments, the first specimen holding unit 112 may further include a first clamping ring 162 configured to secure the first specimen 50 to the plate 114. Other methods and techniques for securing the first specimen 50 to the plate 114 may be alternatively employed.

The engagement portion 116 further includes a second plate engagement surface 120 opposite to the first plate engagement surface 118. The second plate engagement surface 120 is spherically curved. The second plate engagement surface 120 may define a sphere with a centre thereof proximal to and spaced apart from the first plate engagement surface 118. More specifically, the centre of the sphere may be defined at a plane of contact of the pair of specimens 50, 60. The plane of contact may be located at a distance from the first plate engagement surface 118. As will be discussed in more detail below, the second plate engagement surface 120 being spherically curved may facilitate wear testing using the device 100.

The plate 114 further includes a mounting portion 122 extending outwardly from the engagement portion 116 along the transverse plane 105. The mounting portion 122 may be integral with the engagement portion 116.

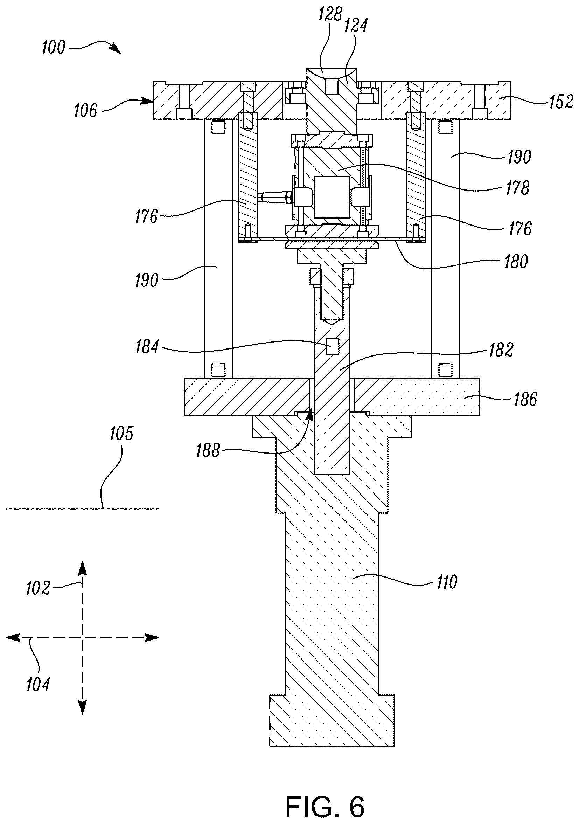

The first specimen holding unit 112 further includes a seat 124 connected to the linear actuator 110. As shown in FIGS. 3 and 4, the seat 124 includes a support portion 126 extending along the longitudinal axis 102. The support portion 126 includes a plate support surface 128 (also shown in FIG. 6) that is complementary with and configured to engage with the second plate engagement surface 120. The plate support surface 128 of the seat 124 and the second plate engagement surface 120 of the plate 114 may allow the plate 114 to undergo multi-axis rotation relative to the seat 124. The plate 114 and the seat 124 may function similar to a ball and socket joint with regards to motion therebetween. The central point of the multi-axis rotation may be located at the plane of contact of the pair of specimens 50, 60.

The seat 124 further includes a coupling portion 130 extending outwardly from the support portion 126 along the transverse plane 105. The coupling portion 130 may be integral with the support portion 126.

The first specimen holding unit 112 further includes a first flexible coupling 132 connecting the mounting portion 122 of the plate 114 to the coupling portion 130 of the seat 124. That is, the plate 114 and the seat 124 may be connected via the first flexible coupling 132. The first flexible coupling 132 may be connected to each of the mounting portion 122 and the coupling portion 130 by any suitable technique, such as by one or more fasteners. The first flexible coupling 132 may be of any suitable type. The first flexible coupling 132 may bend to a certain degree with respect to the longitudinal axis 102 and support the multi-axis rotation of the plate 114 relative to the seat 124. In some embodiments, the first flexible coupling 132 may include a bellows coupling. It may be noted that the first flexible coupling 132 may be stiff in rotation, i.e., resist rotation about the longitudinal axis 102.

The first specimen holding unit 112 further includes at least one first diaphragm plate 134 connected to the frame 106. The first specimen holding unit 112 further includes a first thrust bearing 136 connected to the plate 114 and the at least one first diaphragm plate 134. The first thrust bearing 136 may include a tapered roller bearing. In some embodiments, the at least one first diaphragm plate 134 may include a pair of first diaphragm plates 134. The pair of first diaphragm plates 134 may be connected to the plate 114 at opposite sides of the plate 114 with respect to the longitudinal axis 102.

The device 100 further includes a second specimen holding unit 140. The second specimen holding unit 140 is shown in more detail in FIGS. 3 and 4. The second specimen holding unit 140 includes a shaft 142 extending along the longitudinal axis 102 and connected to the rotary actuator 108. The shaft 142 includes a shaft end face 144 including a shaft engagement surface 146 configured to engage with the second specimen 60. The second specimen 60 may be secured to the shaft 142, such that the second specimen 60 engages with the shaft engagement surface 146. In some embodiments, the second specimen holding unit 140 may further include a second clamping ring 164 configured to secure the second specimen 60 to the shaft 142. Other methods and techniques for securing the second specimen 60 to the shaft 142 may be alternatively employed.

As shown in FIGS. 3 and 4, the shaft 142 further includes a flange 148 extending along the transverse plane 105 and spaced apart from the shaft end face 144 along the longitudinal axis 102. The second specimen holding unit 140 further includes a second thrust bearing 150 connected to the frame 106 and disposed between the flange 148 of the shaft 142 and the frame 106 with respect to the longitudinal axis 102. In some embodiments, the second specimen holding unit 140 may further include a spreader plate 149 disposed between the flange 148 and the second thrust bearing 150 with respect to the longitudinal axis 102. The spreader plate 149 may distribute a load from the shaft 142 to the second thrust bearing 150. The second thrust bearing 150 may include a tapered roller bearing. In some embodiments, each of the first thrust bearing 136 and the second thrust bearing 150 may include a tapered roller bearing.

The rotary actuator 108 is configured to rotate the second specimen 60 about the longitudinal axis 102. Furthermore, the linear actuator 110 is configured to move the first specimen 50 along the longitudinal axis 102, such that the first specimen 50 engages with the second specimen 60.

The system 10 may facilitate determining accurate fretting wear coefficients for the first specimen 50 and the second specimen 60. Specifically, the device 100 and each of the first specimen 50 and the second specimen 60 may facilitate determining the accurate fretting wear coefficients.

The device 100 may maintain both translational alignment and angular alignment of the first specimen 50 and the second specimen 60 during wear testing. The device 100 may further maintain respective engagement surfaces of the first specimen 50 and the second specimen 60 in a substantially coplanar arrangement during wear testing.

The translational alignment may be maintained by the first thrust bearing 136 and the second thrust bearing 150. Specifically, a normal load applied to the second specimen 60, due to engagement with the first specimen 50, by the linear actuator 110 may be reacted to the frame 106 through the second thrust bearing 150. This may promote maintenance of the second specimen 60 at a desired position. Further, a normal load experienced by the first specimen 50, due to engagement with the second specimen 60, may be reacted to a portion or a member of the frame 106 proximal to the linear actuator 110. Furthermore, upon engagement the first specimen 50 with the second specimen 60, a radial load may be applied to the first specimen 50 by the rotary actuator 108. The radial load may be carried to the frame 106 by the at least one first diaphragm plate 134. Normal loads applied to the first thrust bearing 136 and the second thrust bearing 150 (and the consequent radial reaction force) may be controllable and independent of a test load (i.e., an axial load applied using the linear actuator 110 along the longitudinal axis 102). For example, the normal load applied to the first thrust bearing 136 and the second thrust bearing 150 may be controlled by tensioning of suitable fasteners.

The angular alignment may be maintained by the plate 114, the seat 124, and the first flexible coupling 132. Specifically, the plate 114 and the seat 124 may allow the first specimen 50 to conform with the second specimen 60 due to bending of the first flexible coupling 132. This may improve a contact between the respective engagement surfaces of the first specimen 50 and the second specimen 60. As discussed above, the second plate engagement surface 120 may define a sphere with a centre thereof proximal to but spaced apart from the first plate engagement surface 118. The centre of the sphere may lie in the plane of contact of the respective engagement surfaces of the first specimen 50 and the second specimen 60, thereby removing coupling between the angular misalignment and the translational misalignment. As a result, the test load may be uniformly distributed over the respective engagement surfaces of the first specimen 50 and the second specimen 60.

The system 10 may allow precise wear study of the first specimen 50 and the second specimen 60 during an initial contact (e.g., prior to oxidation of the first specimen 50 and the second specimen 60), through the transition states of the first specimen 50 and the second specimen 60, and in worn-in states the first specimen 50 and the second specimen 60 as a function of cycle number. This may be important as the coefficient of friction (CoF) between the respective engagement surfaces of the first specimen 50 and the second specimen 60 may change due to production of oxides and other byproducts. In some cases, the system 10 may obviate the need for wear testing in a "wearing" or "running in" stage, which is typically needed to be performed in conventional wear testing.

The device 100 may also provide load paths between the linear actuator 110 and the rotary actuator 108, such that the rotary actuator 108 does not experience axial load, and the linear actuator 110 does not experience torque. Instead, the torque and the axial load may be reacted directly to the frame 106.

The system 10 may be used for dry and non-lubricated fretting wear testing. The system 10 may improve a design process of components that contact each other during operation, and reduce a likelihood of pre-mature failure of the components. The system 10 may also be used at high temperatures, in baths of a fluid, in a gas environment, and the like.

The frame 106 may include a first horizontal member 152 extending along the transverse plane 105. The first horizontal member 152 may include a first aperture 154 configured to at least partially receive the seat 124 of the first specimen holding unit 112. The frame 106 may further include a second horizontal member 156 extending along the transverse plane 105 and spaced apart from the first horizontal member 152 along the longitudinal axis 102. The second horizontal member 156 may include a second aperture 158 configured to at least partially receive the shaft 142 of the second specimen holding unit 140. The second thrust bearing 150 may be connected to the second horizontal member 156. The frame 106 may further include at least one first vertical member 160 extending along the longitudinal axis 102. The at least one first vertical member 160 may connect the first horizontal member 152 to the second horizontal member 156. The at least one first vertical member 160 may be connected to each of the first horizontal member 152 and the second horizontal member 156 using any suitable technique, such as by one or more fasteners. The at least one first diaphragm plate 134 of the first specimen holding unit 112 may be connected to the at least one vertical member 160. The at least one first diaphragm plate 134 may transfer loads from the first thrust bearing 136 to the at least one first vertical member 160 of the frame 106.

As shown in FIG. 4, the plate 114 of the first specimen holding unit 112 may include a plate aperture 115. The plate aperture 115 may extend through the engagement portion 116 of the plate 114. Further, the seat 124 of the first specimen holding unit 112 may include a seat aperture 125. The seat aperture 125 may extend partially through the support portion 126 of the seat 124. Moreover, the shaft 142 of the second specimen holding unit 140 may include a shaft aperture 143. The shaft aperture 143 may extend through the shaft end face 144 of the shaft 142. The device 100 may further include a centring rod 138 extending through the shaft aperture 143, the plate aperture 115, and the seat aperture 125. The centring rod 138 may be further configured to extend through each of the first specimen 50 and the second specimen 60. The centring rod 138 may improve the translation alignment of the first specimen 50 and the second specimen 60.

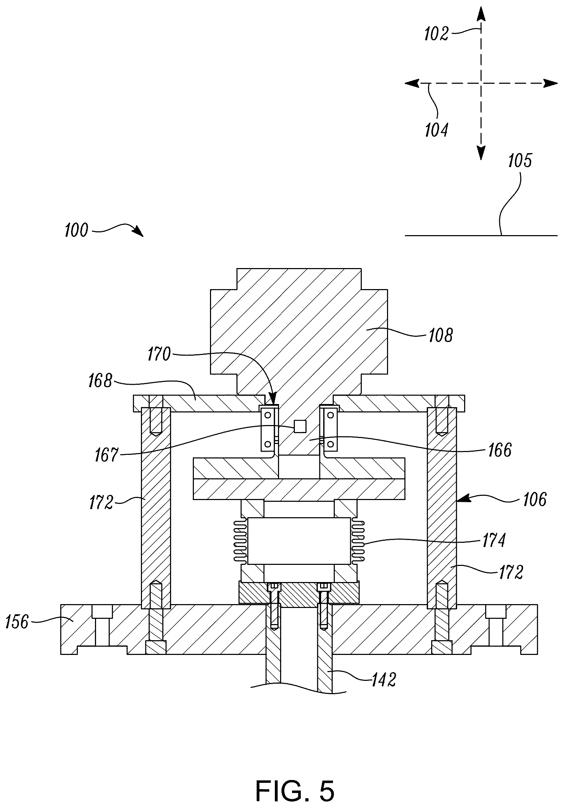

FIG. 5 shows a cross-sectional view of a portion of the device 100 in accordance with an embodiment of the present disclosure.

Referring to FIGS. 2 and 5, the frame 106 may further include a third horizontal member 168 extending along the transverse plane 105 and spaced apart from the second horizontal member 156 along the longitudinal axis 102. As shown in FIG. 2, the third horizontal member 168 may be proximal to the second horizontal member 156 and distal to the first horizontal member 152. The rotary actuator 108 may be connected to the third horizontal member 168.

The rotary actuator 108 may include a rotary shaft 166. The rotary shaft 166 may be connected to the shaft 142, such that the rotary actuator 108 can rotate the second specimen 60 about the longitudinal axis 102. The third horizontal member 168 may include a third aperture 170 configured to receive the rotary shaft 166 of the rotary actuator 108.

The device 100 may further include a rotary sensor 167 (schematically depicted by a block in FIG. 5) configured to detect a rotation angular velocity or a rotation angular displacement of the rotary shaft 166 of the rotary actuator 108. The rotary sensor 167 may include, for example, a rotary encoder. The rotary encoder may allow coarse control of the rotary actuator 108 during setup of the device 100 for wear testing.

The frame 106 may further include at least one second vertical member 172 extending along the longitudinal axis 102 and connecting the third horizontal member 168 to the second horizontal member 156. The at least one second vertical member 172 may be connected to each of the third horizontal member 168 and the second horizontal member 156 using any suitable technique, such as by one or more fasteners. In some embodiments, the at least one second vertical member 172 may include a plurality of second vertical members 172, depending upon desired design attributes.

The device 100 may further include a second flexible coupling 174 connecting the rotary actuator 108 to the shaft 142 of the second specimen holding unit 140. Specifically, the second flexible coupling 174 may connect the rotary shaft 166 to the shaft 142 of the second specimen holding unit 140. The second flexible coupling 174 may be configured to transmit torque from the rotary shaft 166 to the shaft 142 while accepting a small amount of misalignment therebetween. In some embodiments, the second flexible coupling 174 may include a bellows coupling.

FIG. 6 shows a cross-sectional view of another portion of the device 100 in accordance with an embodiment of the present disclosure.

Referring to FIGS. 2 and 6, the frame 106 may further include at least one third vertical member 176 extending along the longitudinal axis 102 and connected to the first horizontal member 152. The at least one third vertical member 176 may be connected to the first horizontal member 152 by any suitable technique, such as by one or more fasteners. **In** some embodiments, the at least one third vertical member 176 may include a plurality of third vertical members 176.

The device 100 may further include a load cell 178 connecting the linear actuator 110 to the seat 124 of the first specimen holding unit 112. The load cell 178 may be used to measure test loads applied during wear testing. In some embodiments, the device 100 may further include at least one second diaphragm plate 180 disposed between the load cell 178 and the linear actuator 110 along the longitudinal axis 102. The load cell 178 may be connected to the at least one second diaphragm plate 180 using any suitable technique. Further, the at least one second diaphragm plate 180 may be connected to the at least one third vertical member 176. The at least one second diaphragm plate 180 may be connected to the at least one third vertical member 176 by any suitable technique, such as by one or more fasteners. The at least one third vertical member 176 may transfer the radial load from the at least one second diaphragm plate 180 to other parts of the frame 106 (such as the first horizontal member 152).

Further, the linear actuator 110 may include a piston 182. The piston 182 may be connected to the seat 124 via the load cell 178. The linear actuator 110 may move the first specimen 50 along the longitudinal axis 102 by moving the piston 182. **In** some embodiments, the device 100 may further include a linear sensor 184 (schematically depicted by a block in FIG. 6) configured to detect a position of the piston 182 of the linear actuator 110. The linear sensor 184 may include a linear variable differential transformer (LVDT), a position transducer, and the like. For example, the LVDT may allow coarse control of the linear actuator 110 during setup of the device 100 for wear testing. The LVDT may provide micron-level accuracy at the respective engagement surfaces of the first specimen 50 and the second specimen 60.

In some embodiments, the frame 106 may further include a fourth horizontal member 186 extending along the transverse plane 105 and spaced apart from the first horizontal member 152 along the longitudinal axis 102. As shown in FIG. 2, the fourth horizontal member 186 may be proximal to the first horizontal member 152 and distal to the second horizontal member 156. The fourth horizontal member 186 may be spaced apart from the at least one second diaphragm plate 180 along the longitudinal axis 102. The linear actuator 110 may be connected to the fourth horizontal member 186. The fourth horizontal member 186 may include a fourth aperture 188 configured to receive the piston 182 of the linear actuator 110.

In some embodiments, the frame 106 may further include at least one fourth vertical member 190 extending along the longitudinal axis 102 and connecting the fourth horizontal member 186 to the first horizontal member 152. The at least one fourth vertical member 190 may be connected to each of the fourth horizontal member 186 and the first horizontal member 152 by any suitable technique, such as by one or more fasteners. In some embodiments, the at least one fourth vertical member 190 may include a plurality of fourth vertical members 190.

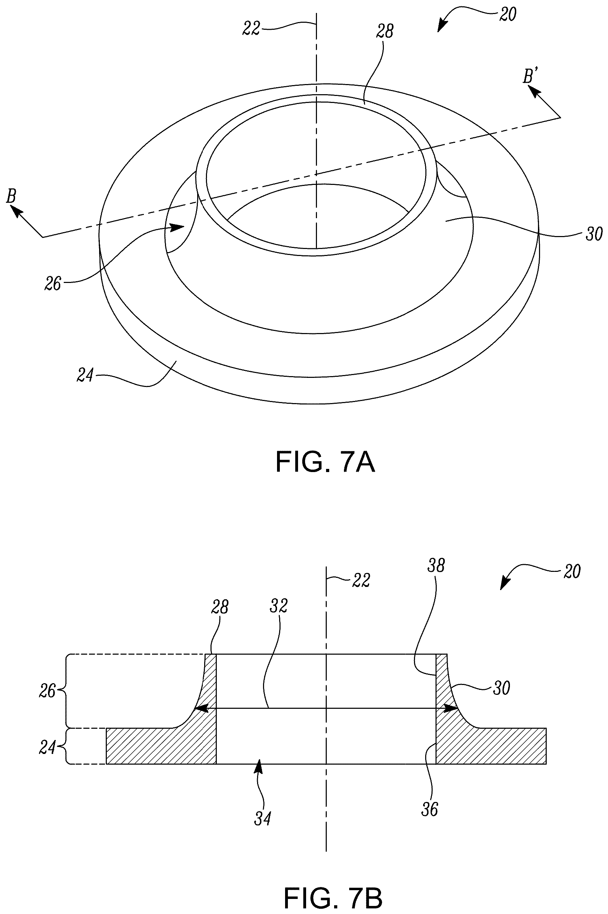

FIGS. 7A and 7B show a specimen 20 for wear testing in accordance with an embodiment of the present disclosure. Specifically, FIG. 7A shows a perspective view of the specimen 20 and FIG. 7B shows a cross-sectional view of the specimen 20 taken along a line B-B' of FIG. 7A.

Referring to FIGS. 7A and 7B, the specimen 20 includes a base 24. The specimen 20 further includes a projection 26 extending from the base 24 along and about a specimen axis 22. In some embodiments, the base 24 and the projection 26 may be integral.

The projection 26 includes an engagement surface 28 that is planar and annular. The projection 26 further includes a projection exterior surface 30 that is curved along the specimen axis 22. The projection exterior surface 30 defines an outer diameter 32 of the projection 26. The outer diameter 32 of the projection 26 decreases non-linearly along the specimen axis 22 from the base 24 to the engagement surface 28.

The specimen 20 may enable uniform pressure distribution over the engagement surface 28 during wear testing. The specimen 20 may experience nominally identical wear conditions over the engagement surface 28.

Two units of the specimen 20 (also referred to as "the specimens 20") may be used for wear testing. The engagement surface 28 of one specimen 20 may engage with the engagement surface 28 of the other specimen 20. Both the specimens 20 may experience uniform pressure distribution over the engagement surface 28 during wear testing. Further, the outer diameter 32 of the projection 26 that decreases non-linearly may facilitate achieving nominally identical wear conditions over the engagement surface 28 of each of the specimens 20. Thus, pointwise pressure and pointwise slip amplitude may be substantially equal to their average values.

Wear data obtained by wear testing the specimens 20 (each of the specimens 20 having the engagement surface 28 whose conditions are known in terms of pressure, slip amplitude, and ejection of debris) may be beneficial as pressure, slip amplitude, and ejection of debris may have strong effects on a rate of wear of the specimens 20. The wear data obtained by wear testing using the specimens 20 may advantageously include information related to steady state conditions as well as transient conditions of the specimens 20.

In some embodiments, the outer diameter 32 of the projection 26 may decrease along the specimen axis 22 from the base 24 to the engagement surface 28 in accordance with an elliptical function. The aforementioned geometry may provide reduction in the variation of pressure distribution over the engagement surface 28 due to the Poisson effect. **In** some cases, the geometry may minimise this variation to less than 1% (independent of loading during wear testing).

In some embodiments, the base 24 may include an aperture 34 surrounded by the projection 26. The aperture 34 may define a base interior surface 36. The projection 26 may include a projection interior surface 38 opposite to the projection exterior surface 30. As shown in FIG. 7B, in some embodiments, the projection interior surface 38 and the base interior surface 36 may be continuous.

Referring to FIG. 2, each of the first specimen 50 and the second specimen 60 may be the specimen 20. Specifically, in some embodiments, each of the first specimen 50 and the second specimen 60 may include the base 24 and the projection 26.

Various examples have been described, each of which comprise various combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A device (100) for wear testing, the device (100) comprising:
a frame (106) having a longitudinal axis (102) and a transverse axis (104) perpendicular to the longitudinal axis (102), and a transverse plane (105) perpendicular to the longitudinal axis (102);
a rotary actuator (108);
a linear actuator (110) spaced apart from the rotary actuator (108) along the longitudinal axis (102);
a first specimen holding unit (112) comprising;
a plate (114) comprising:
an engagement portion (116) extending along the longitudinal axis (102), the engagement portion (116) comprising;
a first plate engagement surface (118) that is planar and configured to engage with a first specimen (50); and
a second plate engagement surface (120) opposite to the first plate engagement surface (118), wherein the second plate engagement surface (120) is spherically curved; and
a mounting portion (122) extending outwardly from the engagement portion (116) along the transverse plane (105);
a seat (124) connected to the linear actuator (110), the seat (124) comprising:
a support portion (126) extending along the longitudinal axis (102), the support portion (126) comprising a plate support surface (128) that is complementary with and configured to engage with the second plate engagement surface (120); and
a coupling portion (130) extending outwardly from the support portion (126) along the transverse plane (105);
a first flexible coupling (132) connecting the mounting portion (122) of the plate (114) to the coupling portion (130) of the seat (124);
at least one first diaphragm plate (134) connected to the frame (106); and
a first thrust bearing (136) connected to the plate (114) and the at least one first diaphragm plate (134);
a second specimen holding unit (140) comprising:
a shaft (142) extending along the longitudinal axis (102) and connected to the rotary actuator (108), wherein the shaft (142) comprises:
a shaft end face (144) comprising a shaft engagement surface (146) configured to engage with a second specimen (60); and
a flange (148) extending along the transverse plane (105) and spaced apart from the shaft end face (144) along the longitudinal axis (102); and
a second thrust bearing (150) connected to the frame (106) and disposed between the flange (148) of the shaft (142) and the frame (106) with respect to the longitudinal axis (102);
wherein the rotary actuator (108) is configured to rotate the second specimen (60) about the longitudinal axis (102), and wherein the linear actuator (110) is configured to move the first specimen (50) along the longitudinal axis (102), such that the first specimen (50) engages with the second specimen (60).

2. The device (100) of claim of 1, wherein the frame (106) comprises:
a first horizontal member (152) extending along the transverse plane (105), the first horizontal member (152) comprising a first aperture (154) configured to at least partially receive the seat (124) of the first specimen holding unit (112);
a second horizontal member (156) extending along the transverse plane (105) and spaced apart from the first horizontal member (152) along the longitudinal axis (102), the second horizontal member (156) comprising a second aperture (158) configured to at least partially receive the shaft (142) of the second specimen holding unit (140), wherein the second thrust bearing (150) is connected to the second horizontal member (156); and
at least one first vertical member (160) extending along the longitudinal axis (102) and connecting the first horizontal member (152) to the second horizontal member (156), wherein the at least one first diaphragm plate (134) of the first specimen holding unit (112) is connected to the at least one first vertical member (160).

3. The device (100) of claim 2, wherein:
the rotary actuator (108) comprises a rotary shaft (166); and
the frame (106) further comprises:
a third horizontal member (168) extending along the transverse plane (105) and spaced apart from the second horizontal member (156) along the longitudinal axis (102), wherein the third horizontal member (168) is proximal to the second horizontal member (156) and distal to the first horizontal member (152), wherein the rotary actuator (108) is connected to the third horizontal member (168), and wherein the third horizontal member (168) comprises a third aperture (170) configured to receive the rotary shaft (166) of the rotary actuator (108); and
at least one second vertical member (172) extending along the longitudinal axis (102) and connecting the third horizontal member (168) to the second horizontal member (156).

4. The device (100) of claim 3, further comprising a rotary sensor (167) configured to detect a rotation angular velocity or a rotation angular displacement of the rotary shaft (166) of the rotary actuator (108).

5. The device (100) of any one of claims 2 to 4, wherein:
the frame (106) further comprises at least one third vertical member (176) extending along the longitudinal axis (102) and connected to the first horizontal member (152); and
the device (100) further comprises:
a load cell (178) connecting the linear actuator (110) to the seat (124) of the first specimen holding unit (112); and
at least one second diaphragm plate (180) disposed between the load cell (178) and the linear actuator (110) along the longitudinal axis (102) and connected to the at least one third vertical member (176).

6. The device (100) of claim 5, wherein:
the linear actuator (110) comprises a piston (182); and
the frame (106) further comprises:
a fourth horizontal member (186) extending along the transverse plane (105) and spaced apart from the first horizontal member (152) along the longitudinal axis (102), wherein the fourth horizontal member (186) is proximal to the first horizontal member (152) and distal to the second horizontal member (156), wherein the fourth horizontal member (186) is spaced apart from the at least one second diaphragm plate (180) along the longitudinal axis (102), wherein the linear actuator (110) is connected to the fourth horizontal member (186), and wherein the fourth horizontal member (186) comprises a fourth aperture (188) configured to receive the piston (182) of the linear actuator (110); and
at least one fourth vertical member (190) extending along the longitudinal axis (102) and connecting the fourth horizontal member (186) to the first horizontal member (152).

7. The device (100) of claim 6, further comprising a linear sensor (184) configured to detect a position of the piston (182) of the linear actuator (110).

8. The device (100) of any preceding claim, wherein:
the shaft (142) of the second specimen holding unit (140) comprises a shaft aperture (143);
the plate (114) of the first specimen holding unit (112) comprises a plate aperture (115);
the seat (124) of the first specimen holding unit (112) comprises a seat aperture (125); and
the device (100) further comprises a centring rod (138) extending through the shaft aperture (143), the plate aperture (115), and the seat aperture (125).

9. The device (100) of claim 8, wherein:
the shaft aperture (143) extends through the shaft end face (144) of the shaft (142);
the plate aperture (115) extends through the engagement portion (116) of the plate (114);
the seat aperture (125) extends partially through the support portion (126) of the seat (124); and
the centring rod (138) is configured to extend through each of the first specimen (50) and the second specimen (60).

10. The device (100) of any preceding claim, wherein:
the first specimen holding unit (112) further comprises a first clamping ring (162) configured to secure the first specimen (50) to the plate (114); and
the second specimen holding unit (140) further comprises a second clamping ring (164) configured to secure the second specimen (60) to the shaft (142).

11. The device (100) of any preceding claim, further comprising a second flexible coupling (174) connecting the rotary actuator (108) to the shaft (142) of the second specimen holding unit (140).

12. The device (100) of any preceding claim, wherein the at least one first diaphragm plate (134) comprises a pair of first diaphragm plates (134).

13. A system (10) for wear testing, the system (10) comprising:
a first specimen (50);
a second specimen (60) different from the first specimen (50);
a device (100) for wear testing, the device (100) comprising:
a frame (106) having a longitudinal axis (102) and a transverse axis (104) perpendicular to the longitudinal axis (102);
a rotary actuator (108);
a linear actuator (110) spaced apart from the rotary actuator (108) along the longitudinal axis (102);
a first specimen holding unit (112) comprising:
a plate (114) comprising:
an engagement portion (116) extending along the longitudinal axis (102), the engagement portion (116) comprising:
a first plate engagement surface (118) that is planar and configured to engage with the first specimen (50); and
a second plate engagement surface (120) opposite to the first plate engagement surface (118), wherein the second plate engagement surface (120) is spherically curved; and
a mounting portion (122) extending outwardly from the engagement portion (116) along the transverse plane (105);
a seat (124) connected to the linear actuator (110), the seat (124) comprising:
a support portion (126) extending along the longitudinal axis (102), the support portion (126) comprising a plate support surface (128) that is complementary with and configured to engage with the second plate engagement surface (120); and
a coupling portion (130) extending outwardly from the support portion (126) along the transverse plane (105);
a first flexible coupling (132) connecting the mounting portion (122) of the plate (114) to the coupling portion (130) of the seat (124);
at least one first diaphragm plate (134) connected to the frame (106); and
a first thrust bearing (136) connected to the plate (114) and the at least one first diaphragm plate (134);
a second specimen holding unit (140) comprising:
a shaft (142) extending along the longitudinal axis (102) and connected to the rotary actuator (108), wherein the shaft (142) comprises:
a shaft end face (144) comprising a shaft engagement surface (146) configured to engage with the second specimen (60); and
a flange (148) extending along the transverse plane (105) and spaced apart from the shaft end face (144) along the longitudinal axis (102); and
a second thrust bearing (150) connected to the frame (106) and disposed between the flange (148) of the shaft (142) and the frame (106) with respect to the longitudinal axis (102);
wherein the rotary actuator (108) is configured to rotate the second specimen (60) about the longitudinal axis (102), and wherein the linear actuator (110) is configured to move the first specimen (50) along the longitudinal axis (102), such that the first specimen (50) engages with the second specimen (60).

14. The system (10) of claim 13, wherein each of the first specimen (50) and the second specimen (60) comprises:
a base (24); and
a projection (26) extending from the base (24) along and about a specimen axis (22), the projection (26) comprising an engagement surface (28) that is planar and annular, and a projection exterior surface (30) that is curved along the specimen axis (22);
wherein the projection exterior surface (40) defines an outer diameter (32) of the projection (26), and wherein the outer diameter (32) of the projection (26) decreases non-linearly along the specimen axis (22) from the base (24) to the engagement surface (28).

15. The system (10) of claim 14, wherein the outer diameter (32) decreases along the specimen axis (22) from the base (24) to the engagement surface (28) in accordance with an elliptical function.
